# EUROPEAN PATENT APPLICATION

(11) **EP 3 511 827 A1**
(43) Date of publication of application: **17.07.2019**
(21) Application number: 17848563.7
(22) Date of filing: 23.08.2017
(51) Int. Cl.: G06F 9/44

(54) **EXECUTABLE PROGRAM CREATION DEVICE, EXECUTABLE PROGRAM CREATION METHOD, AND EXECUTABLE PROGRAM CREATION PROGRAM**

(30) Priority: 09.09.2016 JP 2016176464
(71) Applicant: Omron Corporation, Kyoto-shi, Kyoto 600-8530 (JP)
(72) Inventor: UNO Kenji, Kyoto-shi Kyoto 600-8530 (JP); HIROTA Takuya, Kyoto-shi Kyoto 600-8530 (JP)
(74) Representative: Horn Kleimann Waitzhofer Patentanwälte PartG mbB
(86) International application number: PCT/JP2017/030047
(87) International publication number: WO 2018/047620

(57) **Abstract**

An executable program creation unit (11) performs lexical-syntactical analysis to generate an intermediate representation from source code, using a compiler program. The executable program creation unit (11) extracts function call processing included in the intermediate representation. The executable program creation unit (11) evaluates a function replacement condition set for the function call processing and corresponding to characteristics of a device controlled by the executable program. The executable program creation unit (11) replaces the function call processing according to a function replacement rule if the function replacement condition is satisfied. The executable program creation unit (11) intermediately generates a relocatable object using the replaced function call processing.

## Description

### TECHNICAL FIELD

The present invention relates to a technology of creating an executable program to be executed by an industrial controller.

### RELATED ART

At present, various systems that include an industrial controller to control a plurality of devices (appliances) are put to practical use. For example, a system disclosed in Non-Patent Document 1 includes an industrial controller (a machine automation controller) that is connected to various devices via a control network. Moreover, the industrial controller is connectable to an executable program creation device, such as a personal computer.

Software for creating an executable program is installed on the personal computer. Using this software, a programmer creates source code as the source of the executable program. The building of the source code creates the executable program. The executable program created using the personal computer is transferred to the industrial controller.

The industrial controller stores the executable program transferred from the personal computer. The industrial controller executes this executable program to perform device control, such as setting of control parameters of various devices.

### RELATED ART DOCUMENTS

### PATENT DOCUMENTS

Non-Patent Document 1: Machine Automation Controller Overview on Control Equipment of Omron, on the Internet: http://www.fa.omron.co.jp/guide/technicalguide/454/270/index.html

### SUMMARY OF THE INVENTION

### PROBLEM TO BE SOLVED BY THE INVENTION

However, the devices connected to the industrial controller may have characteristics affecting the executable program. For this reason, the programmer needs to create a source file corresponding to such characteristics.

For example, suppose that the device is changed from device A to device B and that device A and device B have different characteristics. In this case, the programmer needs to rewrite the source code corresponding to device A into source code corresponding to device B and rebuild the source code.

In view of this, it is an object of the present invention to provide a technology for creating an executable program corresponding to characteristics of a device by using source code having less dependence on the characteristics of the device.

### MEANS FOR SOLVING THE PROBLEMS

An executable program creation device according to the present invention includes a storage unit and an arithmetic unit. The storage unit stores a compiler program for compiling source code. The arithmetic unit creates an executable program by intermediately generating a relocatable object that is based on the source code, including execution of the compiler program.

The arithmetic unit performs lexical-syntactical analysis to generate an intermediate representation from the source code, using the compiler program. The arithmetic unit extracts function call processing included in the intermediate representation. The arithmetic unit evaluates a function replacement condition set for the function call processing and corresponding to characteristics of a device controlled by the executable program. The arithmetic unit replaces the function call processing according to a function replacement rule if the function replacement condition is satisfied. The arithmetic unit intermediately generates a relocatable object using the replaced function call processing.

With this configuration, the executable program including an appropriate function corresponding to the characteristics of the device is automatically created.

### EFFECTS OF THE INVENTION

According to the present invention, an executable program corresponding to characteristics of a device can be created while a burden on a programmer is reduced.

### BRIEF DESCRIPTION OF THE DRAWINGS

- Fig. 1: is a schematic diagram showing a configuration of a system in which an executable program according to an embodiment of the present invention is executed.
- Fig. 2: is a diagram showing a configuration of an executable program creation device according to an embodiment of the present invention.
- Fig. 3: is a diagram showing a data structure of a device variable table.
- FIG. 4: is a diagram showing a data structure of a function replacement rule table.
- FIG. 5: is a flowchart showing a method for creating a library as the source of a function replacement rule table.
- FIG. 6: is a flowchart showing main processing of a method for creating an executable program according to an embodiment of the present invention.
- FIG. 7: is a flowchart showing compilation processing with a function replacement rule.
- FIG. 8: is a flowchart showing processing of function call replacement.
- FIG. 9: is a flowchart showing individual processing.
- FIG. 10: is a diagram showing an example of a data structure of a library in data-type-based replacement processing.
- FIG. 11: is a diagram showing an example of a data structure of a library in endianness-based replacement processing.

### EMBODIMENTS OF THE INVENTION

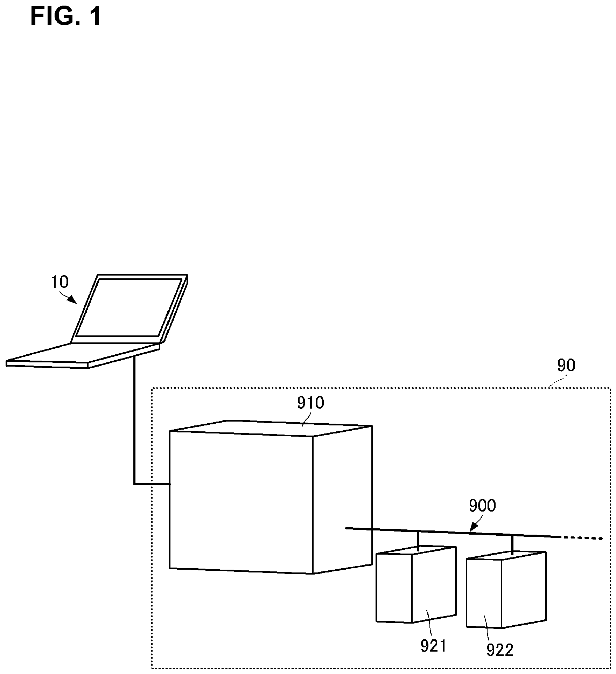

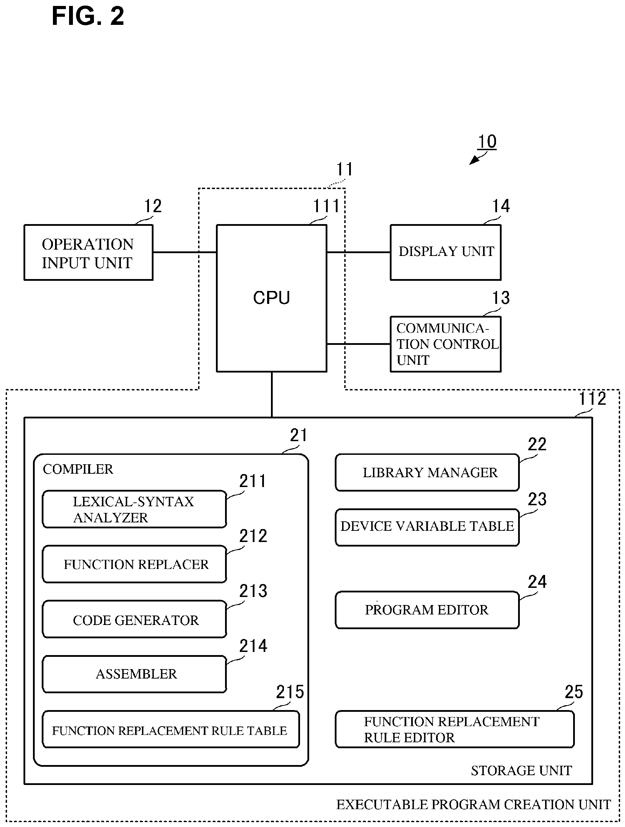

A technology for creating an executable program according to an embodiment of the present embodiment is described, with reference to the accompanying drawings. FIG. 1 is a schematic diagram showing a configuration of a system in which an executable program according to the embodiment of the present invention is executed. FIG. 2 is a diagram showing a configuration of an executable program creation device according to the embodiment of the present invention.

A system in which the executable program according to the present embodiment is used is described first, with reference to FIG. 1. To be more specific, a system 90 shown in FIG. 1 is an FA (Factory Automation) system. The system 90 includes an industrial controller 910, devices 921 and 922, and a network 900.

As shown in FIG. 1, the industrial controller 910, the device 921, and the device 922 are connected to each other via the network 900. The devices 921 and 922 include motion equipment, such as a motor, and a control unit controlling an operation of the motion equipment. The devices 921 and 922 are not limited to this, and may be any device that includes a predetermined operation unit and a control unit controlling an operation of the predetermined operation unit.

Moreover, the industrial controller 910 is connectable to a personal computer 10, as shown in FIG. 1. The executable program executed by the industrial controller 910 is created by the personal computer 10. The industrial controller 910 downloads and stores the executable program created by the personal computer 10. It should be noted that the industrial controller 910 stores a device variable table described later. The industrial controller 910 and the personal computer 10 store the same device variable table.

By executing the executable program with reference to the device variable table, the industrial controller 910 controls the devices 921 and 922 connected to the industrial controller 910 via the network 900. The device variable table is described in detail later.

As shown in FIG. 2, the personal computer 10 includes an executable program creation unit 11, an operation input unit 12, a communication control unit 13, and a display unit 14. The operation input unit 12 is, for example, a mouse and a keyboard. The display unit 14 is, for example, a liquid crystal display. The communication control unit 13 performs control to communicate with the industrial controller 910. Via this communication control unit 13, the industrial controller 910 downloads the executable program.

The executable program creation unit 11 corresponds to the executable program creation device according to the present invention, and includes a CPU 111 and a storage unit 112. The storage unit 112 stores various programs, tables, and so forth. To be more specific, the storage unit 112 stores a compiler 21, a library manager 22, a device variable table 23, a program editor 24, a function replacement rule editor 25. The compiler 21 stores a lexical-syntactical analyzer 211, a function replacer 212, a code generator 213, an assembler 214, and a function replacement rule table 215.

The CPU 111 corresponds to the arithmetic unit according to the present invention, and executes a program stored in the storage unit 112 to create the executable program. In doing so, the CPU 111 creates the executable program by reference to a necessary table.

For example, the program editor 24 writes and edits source code as the source of the executable program. An editing screen of the program editor 24 is displayed on the display unit 14 on which, for example, source code and various commands inputted from the operation input unit 12 are displayed.

The function replacement rule editor 25 writes and edits a dummy function, a replacement function, and a function replacement rule described later, for example. The dummy function, the replacement function, and the function replacement rule are stored in a library (not shown) included in the storage unit 112. The library manager 22 manages various kinds of data stored in the library. Storage information on the dummy function, the replacement function, and the function replacement rule are registered in the library manager 22.

It should be noted that, as described in JIS 3503: 2016 (IEC 61131-3), which is the programming language standard for programmable controllers, a "function" as used in the present specification is a "language element which, when executed, typically yields one data element result and possibly additional output variables." A function is a structural unit used for program management and includes information on, for example, the name of the function, an argument variable group, a return value variable, and code representing processing including functions and procedures. Through a function call, a function allows the processing to be called to a different location of the program to be executed.

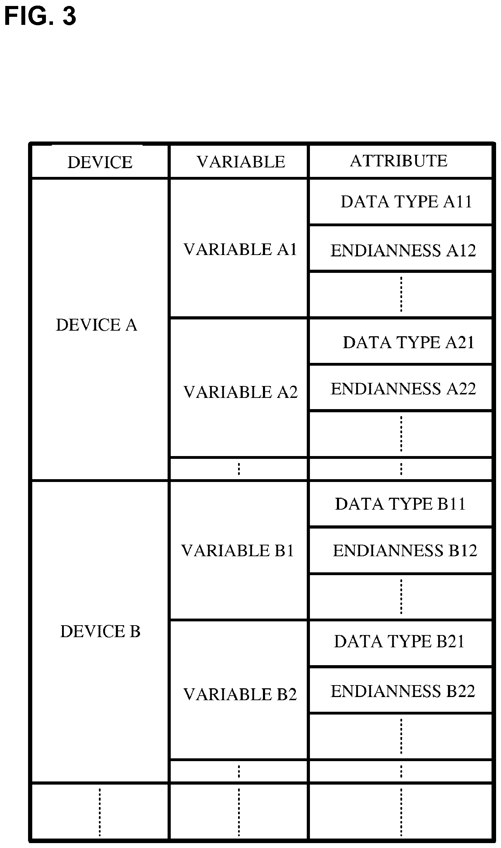

The device variable table 23 stores variables and attributes for each device, for example. To be more specific, the device variable table 23 has a data structure as shown in FIG. 3. FIG. 3 is a diagram showing the data structure of the device variable table. The device variable table 23 stores the devices included in the system 90 in association with variables and attributes of the respective device. The number of devices, the number of variables, and the number of attributes are set in accordance with the device. Examples of the attribute include data type and endianness. In example shown in FIG. 3, device A has variables A1 and A2, and variable A1 has the attributes data type A11 and endianness A12, for example.

Generally speaking, the compiler 21 compiles the source code and creates a relocatable object. The lexical-syntactical analyzer 211 creates an intermediate representation IR from the source code. The function replacer 212 extracts function call processing included in the intermediate representation IR. By reference to the function replacement rule table 215, the function replacer 212 determines whether a function replacement condition is satisfied. If the function replacement condition is satisfied, the function replacer 212 replaces the function call processing according to the function replacement rule.

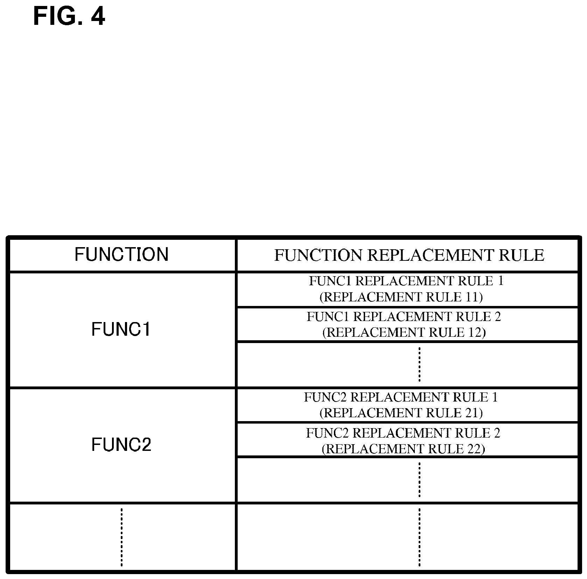

Here, the function replacement rule table 215 stores the function replacement rules stored in the library via the library manager 22 on the basis of the intermediate representation IR. FIG. 4 is a diagram showing the data structure of the function replacement rule table. The function replacement rule table 215 stores the function call processing extracted from the intermediate representation IR and the function replacement rules. In the example shown in FIG. 4, FUNC1, which is subjected to the function call processing, is stored in association with FUNC1 replacement rule 1 (replacement rule 11) and FUNC2 replacement rule (replacement rule 12), for example.

The code generator 213 creates code using the intermediate representation IR including the replacement function call processing. The assembler 214 creates a relocatable object from the generated code.

Here, the dummy function, the replacement function, and the function replacement rule are previously set on the basis of the details in the device variable table 23, that is, the characteristics of variables of the device.

Thus, by the execution of the above processing by the compiler 21, the function call included in the intermediate representation IR calls an appropriate replacement function corresponding to the device characteristics. With this, even when the programmer creates the source code without consideration of the device characteristics, the relocatable object is appropriate in view of the device characteristics. Then, using this relocatable object, an appropriate executable program corresponding to the device characteristics is created. Moreover, when the device is changed and thus the device characteristics are also changed, the industrial controller 910 transmits, to a post-change device (i.e. the changed device), a control command corresponding to the characteristics of this post-change device. In other words, even when the device is changed, the source code does not need to be rewritten.

Next, further specific processing of creating the executable program is described.

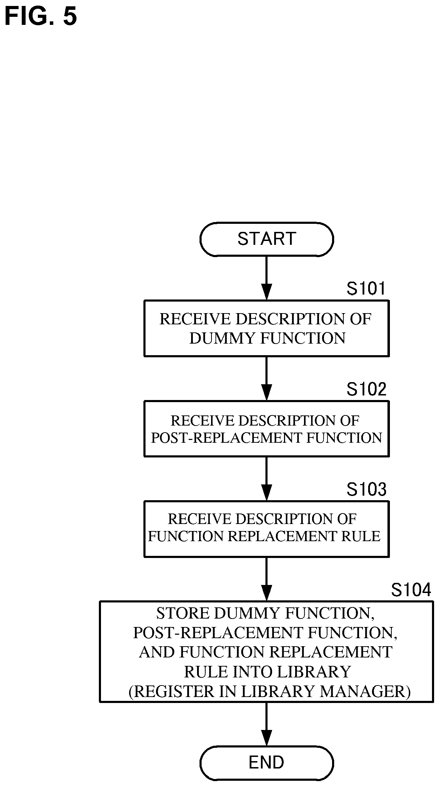

First, processing of creating a library as the source of the function replacement rule table used during compilation is described. FIG. 5 is a flowchart showing a method for creating a library as the source of the function replacement rule table.

As shown in FIG. 5, the executable program creation unit 11 receives a description of a dummy function (S101). The executable program creation unit 11 receives a description of a replacement function (S102). The executable program creation unit 11 receives a description of a function replacement rule (S103). The executable program creation unit 11 stores the dummy function, the replacement function, and the function replacement rule into the library, and registers the dummy function, the replacement function, and the function replacement rule in the library manager 22 (S104).

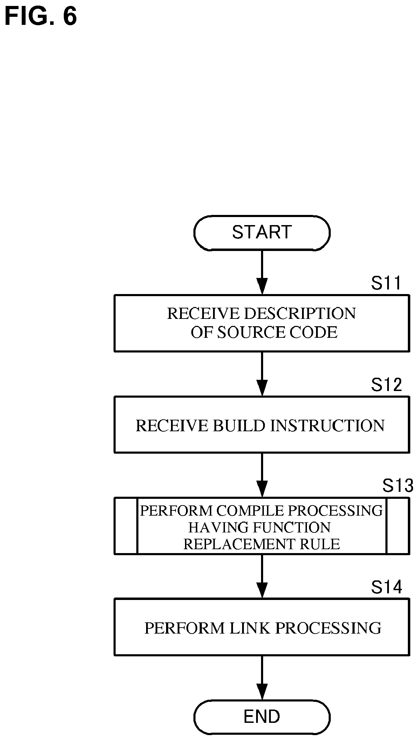

FIG. 6 is a flowchart showing main processing of the method for creating the executable program according to the present embodiment of the present invention.

As shown in FIG. 6, the executable program creation unit 11 receives a description of source code (S11). After receiving the description of source code, the executable program creation unit 11 receives a build instruction (S12).

When receiving the build instruction, the executable program creation unit 11 performs compile processing with a function replacement rule on the source code (S13). As a result, a relocatable object is created.

The executable program creation unit 11 performs link processing on the relocatable object (S14). As a result, an executable program is created.

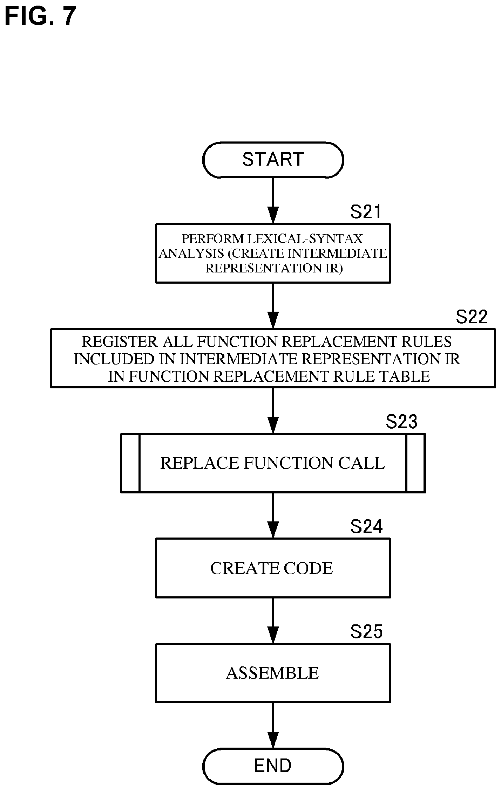

Next, specific processing of compilation processing with a function replacement rule is described. FIG. 7 is a flowchart of compilation processing with a function replacement rule.

The executable program creation unit 11 performs a lexical-syntactical analysis on the source code (S21). The source code is written by the programmer using the dummy function. By the execution of the lexical-syntactical analysis, an intermediate representation IR is created.

The executable program creation unit 11 extracts each function call processing included in the intermediate representation IR. The executable program creation unit 11 detects whether a function replacement rule is given for each function included the intermediate representation IR. Then, the executable program creation unit 11 extracts the given function replacement rule and registers this function replacement rule in the function replacement rule table 215. In doing so, the executable program creation unit 11 registers the dummy function and the replacement function in the function replacement rule table 215 together with the function replacement rule.

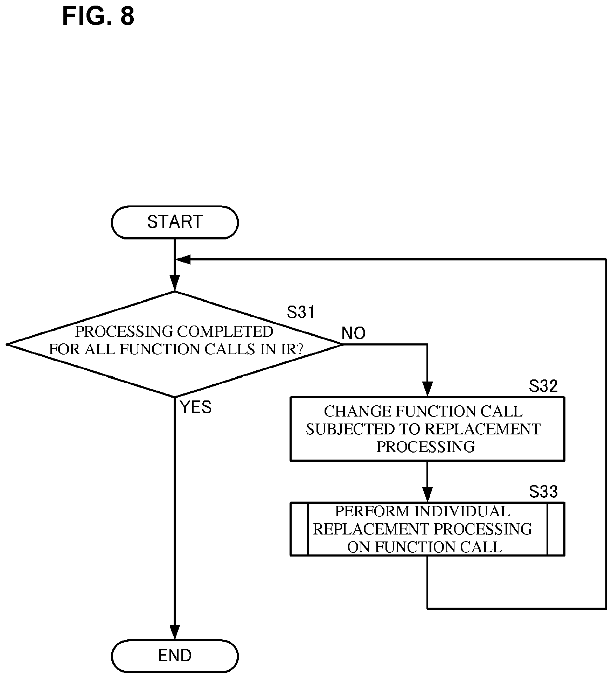

The executable program creation unit 11 performs replacement of the function call (S23). The processing of function call replacement is described with reference to FIG. 8 later.

The executable program creation unit 11 creates code using the intermediate representation IR obtained after the processing of function call replacement (that is, the intermediate representation IR using the replacement function) (S24). Then, the executable program creation unit 11 assembles the code (S25). As a result, a relocatable object is created.

Next, specific processing of function call replacement is described. FIG. 8 is a flowchart showing processing of function call replacement.

If the processing is not yet completed for all the function calls included in the intermediate representation IR, the executable program creation unit 11 changes the function call subjected to the replacement processing (S31: NO → S32).

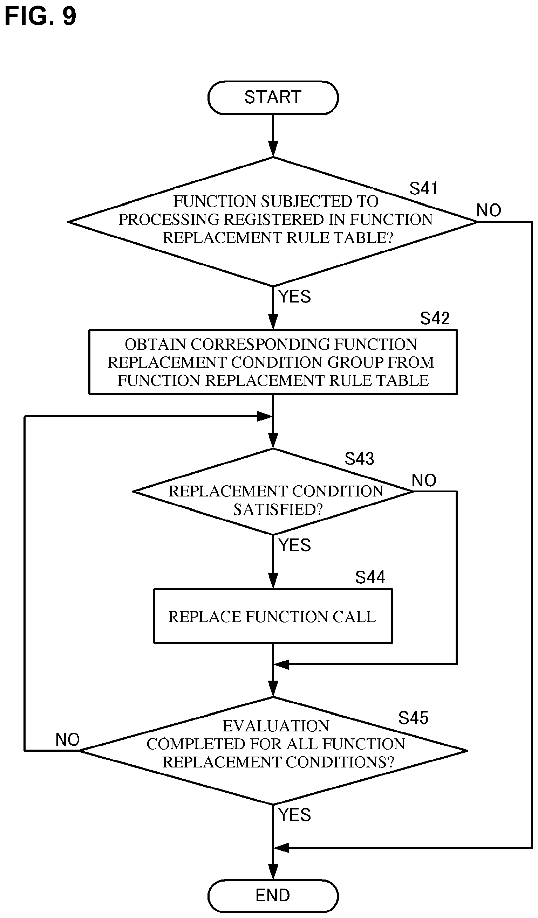

The executable program creation unit 11 performs the individual processing on the function call subjected to the replacement processing (S33). The individual processing is described with reference to FIG. 9.

If the processing is completed for all the function calls included in the intermediate representation IR, the executable program creation unit 11 ends the processing of function call replacement.

Next, specific individual processing is described. FIG. 9 is a flowchart showing the individual processing.

The executable program creation unit 11 detects whether the function of the function call subjected to the processing (i.e., the function subjected to the processing) is registered in the function replacement rule table 215. More specifically, the executable program creation unit 11 detects whether the function corresponds to one of FUNC1, FUNC2 ... shown in FIG. 4.

If the function subjected to the processing is not registered in the function replacement rule table 215 (S41: NO), the executable program creation unit 11 ends the processing without performing the replacement processing on this function call. If the function subjected to the processing is registered in the function replacement rule table 215 (S41: YES), the executable program creation unit 11 proceeds to step S42.

In step S42, the executable program creation unit 11 obtains, from the function replacement rule table 215, a function replacement condition group corresponding to the function subjected to the processing. For instance, in the example shown in FIG. 4, when detecting that the function subjected to the processing is FUNC1, the executable program creation unit 11 obtains the replacement rule 11 and the replacement rule 12.

Next, the executable program creation unit 11 evaluates the function replacement condition. To be more specific, the executable program creation unit 11 detects whether the function replacement condition is satisfied.

If the function replacement condition is satisfied (S43: YES), the executable program creation unit 11 replaces the function call (S44). If the function replacement condition is not satisfied (S43: NO), the executable program creation unit 11 does not replace the function call corresponding to this condition.

If evaluation is not completed for all the function replacement conditions (S45: NO), the executable program creation unit 11 repeats the evaluation. On the other hand, if evaluation is completed for all the function replacement conditions (S45: YES), the executable program creation unit 11 ends the individual processing.

The processing described thus far allows an appropriate executable program corresponding to the device characteristics to be automatically created without the need for the programmer to consider the device characteristics when writing the source code, as described above.

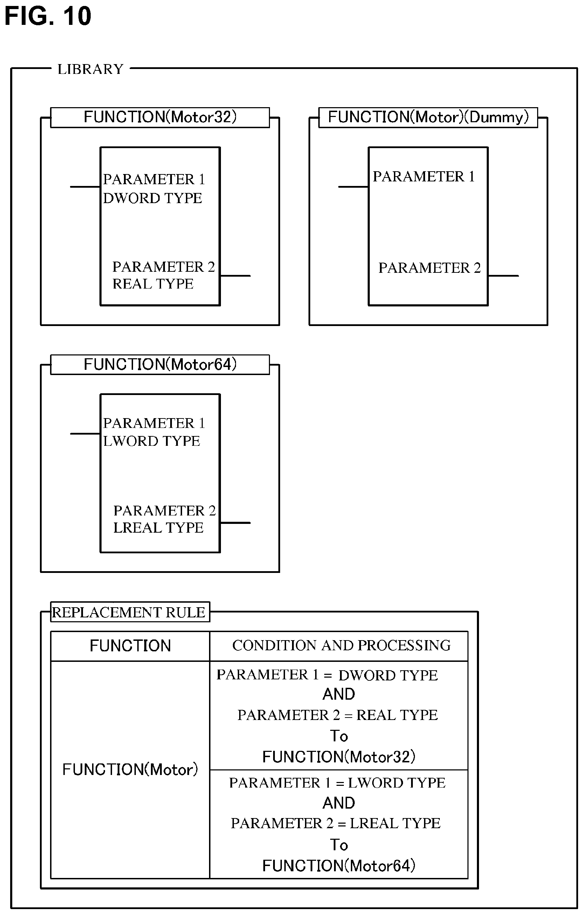

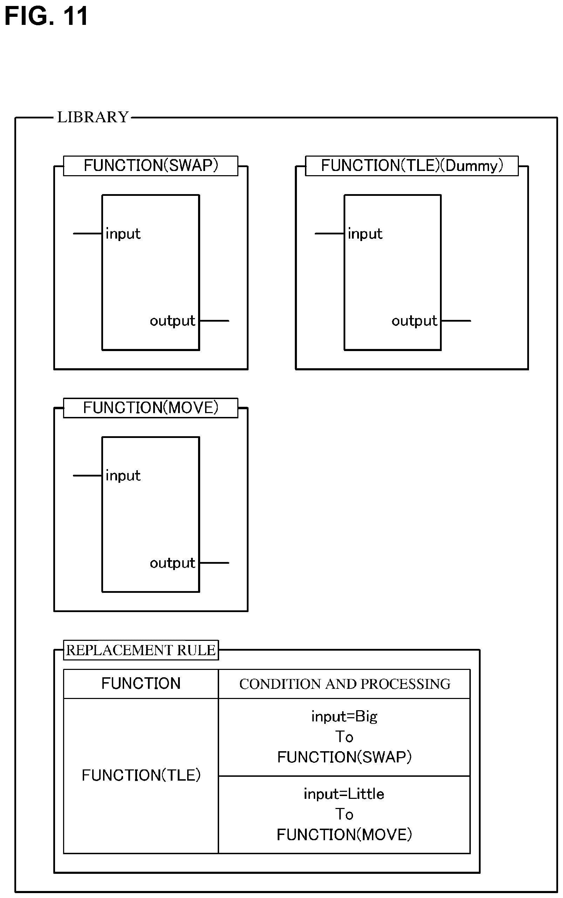

Next, specific examples are described with reference to FIG. 10 and FIG. 11. FIG. 10 is a diagram showing an example of a data structure of a library in data-type-based replacement processing. FIG. 11 is a diagram showing an example of a data structure of a library in endianness-based replacement processing. In FIG. 10 and FIG. 11, the device is a control device for a motor. Moreover, in FIG. 10 and FIG. 11, the program of each function is indicated in ladder notation.

### Example of Data Type

As shown in FIG. 10, for the data-type-based replacement processing, the library stores "FUNCTION (Motor 32)", "FUNCTION (Motor 64)", "FUNCTION (Motor) (Dummy)", and the replacement rules. The library stores "FUNCTION (Motor 32)" having Parameter 1 of DWORD type and Parameter 2 of REAL type. Moreover, the library stores "FUNCTION (Motor 64)" having Parameter 1 of LWORD type and Parameter 2 of LREAL type. Furthermore, "FUNCTION (Motor)" (Dummy) has the same program structure as FUNCTION (Motor 32) and "FUNCTION (Motor 64)", but no data type is designated.

In the replacement rules, the name of the function is stored in association with the condition (replacement condition) and processing. For example, the replacement rules state that if "Parameter 1 = DWORD type" and "Parameter 2 = REAL type" is given as the replacement condition, then "FUNCTION (Motor)" is replaced by "FUNCTION (Motor 32)" as the processing. Moreover, the replacement rules state that if "Parameter 1 = LWORD type" and "Parameter 2 = LREAL type" is given as the replacement condition, then "FUNCTION (Motor)" is replaced by "FUNCTION (Motor 64)" as the processing.

In this way, when detecting the call of "FUNCTION (Motor)" in the intermediate representation IR, the executable program creation unit 11 creates a relocatable object in which the call of "FUNCTION (Motor 32)" is executed if "Parameter 1 = DWORD type" and "Parameter 2 = REAL type" is given and in which the call of "FUNCTION (Motor 64)" is executed when "Parameter 1 = LWORD type" and "Parameter 2 = LREAL type" is given. Then, the industrial controller 910 executes the executable program including this relocatable object.

### Example of Endianness

As shown in FIG. 11, for the endianness-based replacement processing, the library stores "FUNCTION (SWAP)", "FUNCTION (MOVE)", "FUNCTION (TLE) (Dummy)", and the replacement rules. "FUNCTION (SWAP)" is a so-called SWAP function. "FUNCTION (MOVE)" is a so-called MOVE function. "FUNCTION (TLE) (Dummy)" is a dummy program for endianness conversion.

In the replacement rules, the name of the function is stored in association with the condition (replacement condition) and processing. For example, the replacement rules state that if "input = Big" is given as the replacement condition, then "FUNCTION (TLE)" is replaced by "FUNCTION (SWAP)" as the processing. Moreover, the replacement rules state that if "input = Little" is given as the replacement condition, then "FUNCTION (TLE)" is replaced by "FUNCTION (Move)" as the processing.

In this way, when detecting the call of "FUNCTION (TLE)" in the intermediate representation IR, the executable program creation unit 11 creates a relocatable object in which the call of "FUNCTION (SWAP)" is executed if "input = Big" is given and in which the call of "FUNCTION (Move)" is executed if "input = Little" is given. Then, the industrial controller 910 executes the executable program including this relocatable object.

As described thus far, the configuration, the method, and the program according to the present embodiment allows an executable program that is appropriate for the device controlled by the executable program to be automatically created without the need for the programmer to consider the device characteristics, such as data type or endianness, when writing the source code.

### INDEX TO THE REFERENCE NUMERALS

10 ... personal computer, 11 ... executable program creation unit, 12 ... operation input unit, 13 ... communication control unit, 14 ... display unit, 21 ... compiler, 22 ... library manager, 23 ... device variable table, 24 ... program editor, 25 ... function replacement rule editor, 90 ... system, 111 ... CPU, 112 ... storage unit, 211 ... lexical-syntactical analyzer, 212 ... function replacer, 212 ... replacer, 213 ... code generator, 214 ... assembler, 215 ... function replacement rule table, 900 ... network, 910 ... industrial controller, 921 ... device, 922 ... device

## Claims

1. An executable program creation device comprising:
a storage unit storing a compiler program for compiling source code; and
an arithmetic unit configured to create an executable program by intermediately generating a relocatable object that is based on the source code, including execution of the compiler program,
wherein the arithmetic unit is configured to, using the compiler program:
perform lexical-syntactical analysis to generate an intermediate representation from the source code;
extract function call processing included in the intermediate representation;
replace the extracted function call processing in accordance with a function replacement rule if a function replacement condition set corresponding to characteristics of a device controlled by the executable program is satisfied; and
intermediately generate the relocatable object using the replaced function call processing.

2. The executable program creation device according to claim 1,
wherein the compiler program stored in the storage unit has a function replacement rule table including the function replacement condition, and
the arithmetic unit is configured to evaluate the function replacement condition if a function subjected to call processing corresponds to the function replacement condition stored in the function replacement rule table.

3. The executable program creation device according to one of claim 1 and claim 2,
wherein the storage unit stores a function library, and
the function library includes:
a dummy function used for the source code; and
a plurality of replacement functions corresponding to the dummy function.

4. An executable program creation method for creating an executable program by intermediately generating a relocatable object that is based on the source code, including compilation of source code, the executable program creation method comprising:
performing lexical-syntactical analysis to generate an intermediate representation from the source code;
evaluating a function replacement condition corresponding to function call processing included in the intermediate representation;
replacing the extracted function call processing according to a function replacement rule if the function replacement condition is satisfied; and
intermediately generating the relocatable object using the replaced function call processing.

5. An executable program creation program causing a computer to execute processing of creating an executable program by intermediately generating a relocatable object that includes compilation of source code and that is based on the source code, the executable program creation program causing the computer to execute:
performing lexical-syntactical analysis to generate an intermediate representation from the source code;
evaluating a function replacement condition corresponding to function call processing included in the intermediate representation;
replacing the extracted function call processing according to a function replacement rule if the function replacement condition is satisfied; and
intermediately generating the relocatable object using the replaced function call processing.
